# EUROPÄISCHE PATENTSCHRIFT

(11) **EP 2 599 414 B1**
(45) Veröffentlichungstag und Bekanntmachung des Hinweises auf die Patenterteilung: **28.05.2014**
(21) Anmeldenummer: 11401652.0
(22) Anmeldetag: 01.12.2011
(51) Int. Cl.: A47J 31/44, A47J 31/58

(54) **Getränkebereiter**
Drink preparer
Préparateur de boissons

(43) Veröffentlichungstag der Anmeldung: 05.06.2013
(73) Patentinhaber: Miele & Cie. KG, 33332 Gütersloh (DE)
(72) Erfinder: Jungclaus, Dirk, 59302 Oelde (DE); van Pels, Ulrich, 33378 Rheda-Wiedenbrück (DE)

(56) Entgegenhaltungen:
- EP-A1- 1 656 863
- DE-U1-202005 011 476

## Beschreibung

Die Erfindung betrifft einen Getränkebereiter nach dem Oberbegriff des Patentanspruches 1.

Getränkebereiter der hier betroffenen Art sind z.B. aus der DE 202005011476U bekannt und sind für unterschiedliche Anwendungsbereiche einsetzbar. Eine bevorzugte Verwendung betrifft einen Getränkebereiter, der als Kaffeeautomat ausgelegt ist. Derartige Getränkebereiter weisen allgemein einen durch einen Antrieb in der Höhenlage verstellbaren Getränkeauslauf zur Abgabe eines Getränkes in mindestens ein Gefäß auf. Es sind bereits Getränkebereiter im Einsatz, die eine durch den erwähnten Antrieb erfolgende oder eine manuelle Höhenverstellung des Getränkeauslaufs ermöglichen. Als Antrieb kommt zumeist ein Elektromotor zum Einsatz, wobei andere Antriebsmöglichkeiten, wie eine pneumatische, elektromagnetische oder hydraulische ebenfalls denkbar sind. Der Getränkeauslauf wird durch den Antrieb beziehungsweise manuell so weit in Richtung des Gefäßes verschoben, bis ein hinreichender Spritzschutz gegeben ist, was in der Regel dann der Fall ist, wenn der Getränkeauslauf auf dem Gefäßrand aufliegt oder sich sehr dicht darüber befindet. In dieser Position münden die Ausgabedüsen des Getränkeauslaufs unmittelbar in das Gefäß, was den wesentlichen Vorteil mit sich bringt, dass bei der Abgabe des Getränkes kein Verspritzen möglich und zudem insbesondere bei der Zubereitung von Kaffee eine Verbesserung der Schaumbildung (Crema) zu verzeichnen ist.

Es ist jedoch auch bekannt, den Getränkeauslauf mit einer Sicherheitseinrichtung auszustatten, die beispielsweise einen Sicherheitsschalter oder Sicherheitssensor zur Unterbrechung der Höhenverstellung des Getränkeauslaufs aufweist, wobei eine Annäherung an das Gefäß oder ein Kontakt mit dem Gefäß zur Aktivierung des Sicherheitsschalters oder des Sicherheitssensors führt. Eine vorteilhafte, mechanische Ausführungsvariante besteht darin, dass ein um ein Gelenk schwenkbares Stellglied mit einer den Sicherheitsschalter aktivierenden Kontaktfläche vorhanden ist, so dass bei Berührungskontakt des Stellgliedes mit dem Gefäßrand der erwähnte Sicherheitsschalter eine Unterbrechung der Vorwärtsbewegung des Getränkeauslaufs bewirkt. Als Sicherheitsschalter kommt hierbei ein Mikroschalter zum Einsatz. Die beschriebene Lösung ist sehr vorteilhaft mit Hinblick auf den erwähnten Spritzschutz. Zudem kann hiermit ein unerwünschtes Kippen des Gefäßes verhindert werden. Allerdings wird hierbei nur eine von zwei Endpositionen des Getränkeauslaufs detektiert.

Der Erfindung stellt sich somit das Problem, einen Getränkebereiter bereitzustellen, dessen Getränkeauslauf zwischen zwei Endpositionen bewegbar ist und durch geeignete Maßnahmen in den jeweiligen Endpositionen zum Stillstand gebracht werden kann, wobei insgesamt eine einfache und ohne erheblichen Aufwand umzusetzende Lösung geschaffen werden sollte.

Erfindungsgemäß wird dieses Problem durch einen Getränkebereiter mit den Merkmalen des Patentanspruchs 1 gelöst.

Vorteilhafte Ausgestaltungen und Weiterbildungen der Erfindung ergeben sich aus den nachfolgenden Unteransprüchen.

Ein Getränkebereiter mit einem durch einen Antrieb in seiner Höhenlage verstellbaren Getränkeauslauf zur Abgabe eines Getränkes in mindestens ein Gefäß, wobei der Getränkeauslauf eine Sicherheitseinrichtung mit einem Sicherheitsschalter oder Sicherheitssensor zur Unterbrechung der Höhenverstellung des Getränkeauslaufs bei Annäherung an das Gefäß oder bei Kontakt mit dem Gefäß aufweist und zur Aktivierung des Sicherheitsschalters oder des Sicherheitssensors ein um ein Gelenk schwenkbares Stellglied und eine den Sicherheitsschalter oder Sicherheitssensor aktivierende Kontaktfläche vorhanden sind, wurde erfindungsgemäß dahingehend weitergebildet, dass das Stellglied eine weitere Kontaktfläche zur Unterbrechung der Höhenverstellung des Getränkeauslaufs bei Erreichung einer oberen Endposition des Getränkeauslaufs aufweist.

Mit der Erfindung wird in vorteilhafter Weise eine sehr einfache Möglichkeit geschaffen, sowohl eine untere, gefäßnahe, als auch eine obere Endposition des Getränkeauslaufs zu definieren, so dass ein Anschlagen des Getränkeauslaufs in der oberen oder unteren Endposition wirksam vermieden werden kann. Dadurch kann beispielsweise ein wirksamer Kippschutz des Gefäßes erreicht werden. Die Erfindung ist für durch einen Antrieb angetriebene Varianten eines Getränkeauslaufs einsetzbar. Als Besonderheit der Erfindung ist anzusehen, dass lediglich ein Stellglied zum Einsatz kommt, das durch die zusätzliche Kontaktfläche die untere und die obere Endabschaltung und somit gleichzeitig mehrere Funktionen ermöglicht. Hierfür waren bislang mehrere Sicherheitsschalter beziehungsweise Sicherheitssensoren erforderlich. Bei der vorgestellten Lösung kann nur ein einziger Sicherheitsschalter oder Sicherheitssensor zum Einsatz kommen, was ebenfalls eine erhebliche Vereinfachung und folglich eine Kosteneinsparung mit sich bringt.
Es bedarf keiner besonderen Erwähnung, dass der Sicherheitsschalter beziehungsweise der Sicherheitssensor sowohl am Stellglied, als auch am Getränkeauslauf vorgesehen werden kann, während die erste Kontaktfläche dem Sicherheitsschalter beziehungsweise Sicherheitssensor gegenüberliegend angeordnet ist.

Eine erste Ausgestaltung der Erfindung besteht darin, dass das Stellglied ein Hebelarm oder eine Wippe ist. Dieser Vorschlag weist den entscheidenden Vorteil einer besonders einfachen, mechanischen Ausführungsvariante für ein Stellglied auf, der zudem eine Platz sparende Integration in den Getränkebereiter ermöglicht, wobei gleichzeitig die zuvor bereits erwähnte Doppelfunktion des Stellgliedes in sinnvoller Weise ermöglicht wird.

Darüber hinaus geht ein anderer Vorschlag dahin, die Schwenkachse des Gelenks zwischen den beiden Kontaktflächen anzuordnen. Mit anderen Worten weist beispielsweise das Stellglied eine erste, die untere Endposition des Getränkeauslaufs definierende Kontaktfläche, sowie eine zweite, die obere Endposition des Getränkeauslaufs definierende Kontaktfläche auf, zwischen denen sich das Gelenk befindet. Diese spezielle Anordnung gestattet im Zusammenhang mit einem einzigen Sicherheitsschalter beziehungsweise Sicherheitssensor die Umsetzung der erfindungsgemäßen Aufgabenstellung.

Der Sicherheitsschalter kann gemäß einer vorteilhaften Weiterbildung der Erfindung eine mechanische Ausführung, also beispielsweise ein Mikroschalter, sein.
Darüber hinaus besteht die Möglichkeit, als Sicherheitssensor einen optischen oder einen magnetischen Messwertaufnehmer einzusetzen, so dass mindestens eine der Kontaktflächen als korrespondierender Messwertgeber ausgeführt ist. Wird beispielsweise ein magnetischer Sicherheitssensor eingesetzt, so könnte es sich hierbei um einen Hall-Sensor handeln, der auf die Annäherung einer ferromagnetischen Kontaktfläche als Messwertgeber reagiert, welche möglicherweise unmittelbar in das Stellglied integriert oder auf dessen Oberfläche aufgebracht ist. Die erforderliche elektronische Schaltung zur Umsetzung des Abschaltens des Antriebs ist eine einfache Umsetzung und steht dem Fachmann zur Verfügung. Ähnlich verhält es sich bei einem optischen Sicherheitssensor.
Jedoch betrifft die Erfindung auch den umgekehrten Fall, nämlich, dass der Sicherheitssensor ein optischer oder ein magnetischer Messwertgeber ist, so dass mindestens eine der Kontaktflächen aus einem korrespondierenden Messwertaufnehmer besteht.

Die obere Endposition des Getränkeauslaufs kann entsprechend einer vorteilhaften Ausgestaltung der Erfindung durch einen Anschlagflansch definiert sein. Bei einer Bewegung des Getränkeauslaufs in Richtung oberer Endposition kommt somit die zweite, am Stellglied vorhandene Kontaktfläche unmittelbar mit diesem Anschlagflansch in Berührung, wird um das Gelenk verschwenkt und betätigt dabei den Sicherheitsschalter beziehungsweise aktiviert den Sicherheitssensor, was die Abschaltung des Antriebs zur Folge hat und damit die Bewegung des Getränkeauslaufs stoppt. Somit kann die erfindungsgemäße Lösung durch diese einfache, mechanische Maßnahme umgesetzt werden.

Von entscheidenden Vorteil ist es darüber hinaus, wenn das Stellglied gegen die Rückstellkraft einer Feder um das Gelenk schwenkbar ist. Die eine Rückstellkraft bereitstellende Feder gewährleistet dabei, dass das Stellglied stets in seine neutrale Ausgangsposition zurückkehrt, während sich der Getränkeauslauf in Bewegung befindet. Dadurch kann jederzeit exakt der Schaltzeitpunkt festgelegt werden, der letztlich die Endpositionen des Getränkeauslaufs definiert.

Vor allem dann, wenn in einem erfindungsgemäßen Getränkebereiter erhitzte Getränke bereitgestellt werden, kann es vorkommen, dass nach dem Befüllen des Gefäßes mit dem Getränk heißer Dampf austritt, der zu Kondensatrückständen im Bereich des Getränkeauslaufs, an dessen Ausgabedüsen und insbesondere am Stellglied führt. Diese Kondensatrückstände und gegebenenfalls am Stellglied haftende Getränkespritzer können nur unter erheblichen Umständen entfernt werden, wenn das Stellglied unlösbar in dem Getränkebereiter befestigt ist. Aus optischen und hygienischen Gründen ist jedoch eine regelmäßige Reinigung des Ausgabebereichs zu empfehlen und wünschenswert. Deshalb ist es von besonderem Vorteil, wenn das Stellglied als abnehmbare Einheit ausgeführt ist. Durch die lösbare Ausführung des Stellgliedes wird die Reinigung des Stellgliedes sowie des gesamten Getränkeausgabebereichs in erheblichem Maße vereinfacht.

Eine weitere Ausgestaltung der Erfindung sieht ferner vor, dass das als Wippe ausgebildete Stellglied zwei Gelenkzapfen aufweist, die in korrespondierende Lagerstellen des Getränkeauslaufs eingesetzt sind. Die beiden Gelenkzapfen sind dabei Bestandteil je eines Gelenkes, so dass auf diese Weise eine sehr stabile und zuverlässige Befestigung des Stellgliedes ermöglicht wird.

Das Gelenk kann demgemäß dadurch gebildet werden, dass die Gelenkzapfen in je einem Lagerbock des Getränkeauslaufs aufgenommen sind, wobei entsprechend einem weiterführenden Gedanken dieser Lösung die Lagerböcke einen elastisch verformbaren Abschnitt aufweisen können, sodass die Entnahme des Stellgliedes aus dem Getränkeauslauf erheblich vereinfacht wird.

Von besonderem Vorteil für die Lagerung ist es darüber hinaus, wenn die Gelenkzapfen eine kugelförmige Oberfläche aufweisen und die korrespondierende Lagerstelle innerhalb je eines Lagerbockes und als kugelförmige Lagerschale ausgebildet ist. Durch die damit geschaffenen Kugelgelenke ist eine reibungsarme und leichtgängige Lagerung des Stellgliedes gegeben.

Eine vorteilhafte Maßnahme zur Fixierung des Stellgliedes besteht darin, dass die Gelenkzapfen in ihrer Lagerstelle durch je einen Verriegelungshebel gegen unerwünschtes, selbsttätiges Lösen aus der Lagerstelle gesichert sind, was insbesondere Bedeutung erlangt, wenn das Stellglied lösbar im Getränkeauslauf aufgenommen ist.

Zur Erleichterung der Montage und Demontage des Stellgliedes wird einem anderen Gedanken folgend vorgeschlagen, die Gelenkzapfen selbst, zumindest abschnittsweise, elastisch verformbar auszuführen. Eine dadurch geschaffene Beweglichkeit der Gelenkzapfen ist auch deshalb von Vorteil, weil damit gleichzeitig ein Anpressdruck erreicht wird, der den Zusammenhalt des Gelenkes ohne das Erfordernis zusätzlicher Maßnahmen verbessert. In diesem Fall sind elastische Abschnitte der Lagerböcke entbehrlich.

Weist das als Wippe ausgebildete Stellglied für jeden der an dem Getränkeauslauf vorhandenen Ausgabedüsen je eine Ausnehmung auf, so besteht die Möglichkeit, das Stellglied bis um die Ausgabedüsen herum anzuordnen und damit sicherzustellen, dass ein zu befüllendes Gefäß mit Sicherheit durch das Stellglied erfasst wird, auch wenn das Gefäß möglicherweise nicht exakt auf dem vorgesehenen Standpunkt abgestellt wurde. Zudem kann das Stellglied auf diese Weise als Sichtschutz für die inneren Bauelemente des Getränkebereiters genutzt werden und dient damit der optisch ansprechenden Gestaltung des Getränkebereiters.

Die Fertigung des Stellgliedes aus Kunststoff hat den wesentlichen Vorteil, dass es aus einem Stück und mit geringen Kosten hergestellt werden kann sowie insgesamt einfach zu fertigen ist. Daher wird vorgeschlagen, das Stellglied als ein einstückiges Kunsstoff-Formteil auszuführen. Es besteht hierbei die Möglichkeit, beispielsweise die Gelenkzapfen oder die Kontaktfläche unmittelbar an dem Stellglied anzuformen, sodass zusätzliche Fertigungsschritte entfallen können.

Ein Ausführungsbeispiel der Erfindung wird nachfolgend anhand der beigefügten Zeichnungen näher erläutert. Das gezeigte Beispiel stellt keine Einschränkung auf die dargestellte Variante dar, sondern dient lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine Teilansicht eines Getränkebereiters, wie er als Einbaugerät in einem Küchenschrank zum Einsatz kommen kann,
- Figur 2:: eine stark vereinfachte Darstellung des erfindungsgemäßen Prinzips,
- Figur 3:: im Bildteil a) die untere und im Bildteil b) die obere Endposition des Getränkeauslaufs in stark vereinfachter Darstellung,
- Figur 4:: ausschnittsweise einen Blick in einen Getränkebereiter in einer Ansicht von der Geräteinnenseite her und mit einem als Wippe ausgeführten Stellglied,
- Figur 5:: ausschnittsweise einen Blick in einen Getränkebereiter in einer Ansicht von der Geräteinnenseite her und ohne das eingesetzte Stellglied,
- Figur 6:: ein als Wippe ausgeführtes Stellglied als Einzelteil und in perspektivischer Ansicht.

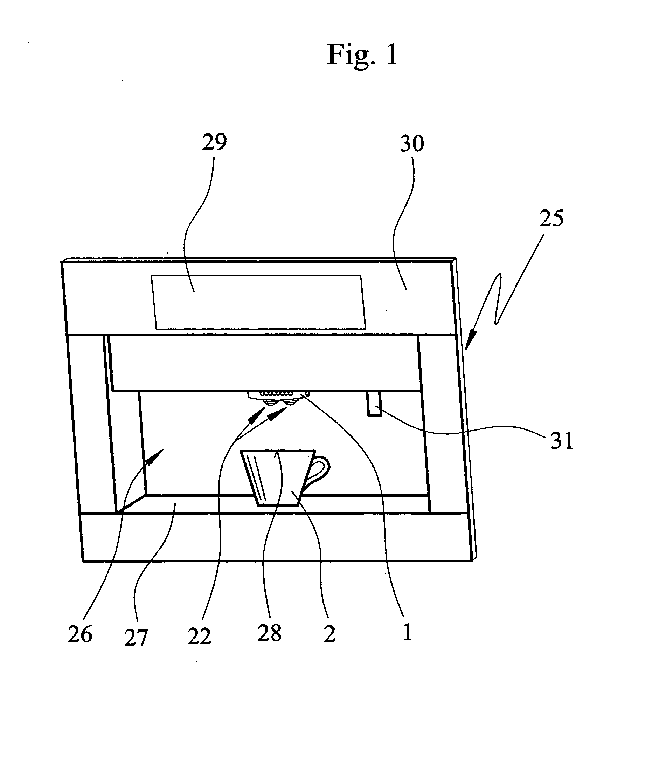

In der Darstellung der Figur 1 ist ein Ausschnitt eines Getränkebereiters gezeigt, wie er beispielsweise als Einbaugerät in einem nicht gezeigten Küchenschrank Verwendung finden kann. Hierbei handelt es sich um einen Kaffeeautomaten. Derartige Getränkebereiter sind in vielfältigen Ausführungsvarianten bekannt und bereits im Einsatz.

Der Getränkebereiter in Figur 1 weist eine Tür 25 auf, in der ein als Mulde ausgebildeter Getränkeausgabebereich 26 ausgebildet ist. Den Boden dieses Getränkeausgabebereiches 26 bildet ein Abtropfblech 27, auf dem in diesem Fall ein einzelnes Gefäß 2 abgestellt ist. Oberhalb des Gefäßes 2 ist ein Getränkeauslauf 1 vorhanden, der sich bei der Ausführung in Figur 1 in seiner oberen Endposition befindet, so dass er nahezu vollständig hinter der hierfür vorgesehenen Abdeckung der Tür 25 verschwunden ist. Auf der dem Gefäß 2 zugewandten Seite des Getränkeauslaufs 1 weist dieser zwei beabstandet zueinander angeordnete Ausgabedüsen 22 zur Abgabe des Getränkes auf. Dabei besteht die Möglichkeit, wie im vorliegenden Fall, nur ein Gefäß 2 mit einem Getränk zu befüllen oder eine Ausgabedüse 22 für je ein zu befüllendes Gefäß zu nutzen, so dass insgesamt zwei Gefäße gleichzeitig mit einem Getränk gefüllt werden können. In der gegenteiligen, unteren Endposition des Getränkeauslaufs 1 ist dieser soweit heruntergefahren, dass die Ausgabedüsen 22 sich unmittelbar oberhalb des Gefäßrandes 28 befinden oder geringfügig in das Gefäß 2 eintauchen. Seitlich neben dem Getränkeauslauf 1 ist darüber hinaus innerhalb des muldenförmigen Getränkeausgabebereiches 26 eine Abgabedüse 31 angeordnet, die beispielsweise bei einem Kaffeeautomaten zur Abgabe von heißem Wasser verwendet wird.

Eine Blende 30 des Getränkebereiters weist ferner ein integriertes Display 29 auf, welches zur Anzeige erforderlicher Informationen und/oder zur Eingabe der für die Getränkezubereitung erforderlichen Daten genutzt wird.

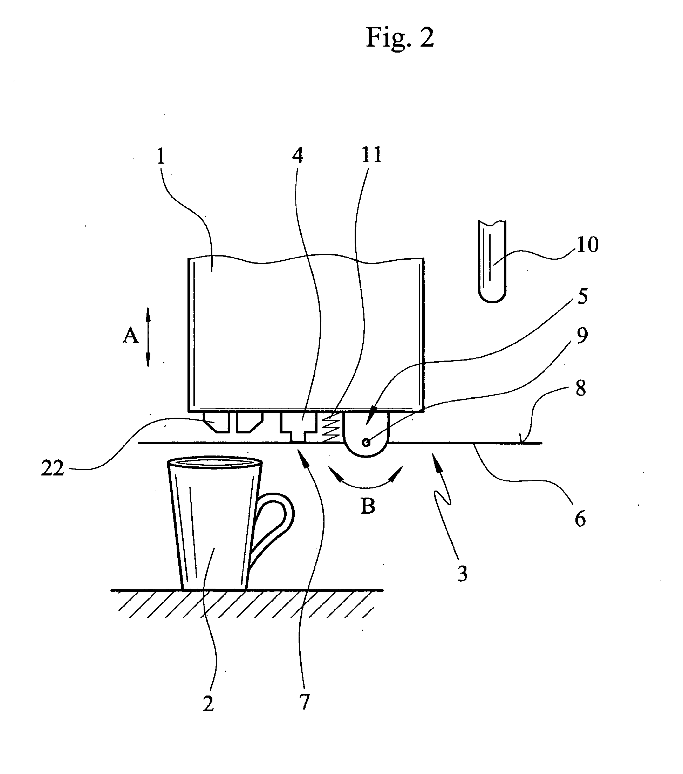

Aus der Figur 2 geht in stark vereinfachter Darstellung eine erfindungsgemäße Ausführung eines Getränkebereiters hervor. Der Getränkeauslauf 1 kann dabei in Richtung des Doppelfeils "A" zwischen einer oberen und einer unteren Endposition hin und her bewegt werden. Zur Verstellung dient dabei ein in der Figur 2 nicht gezeigter elektromotorischer Antrieb. Unterhalb des Getränkeauslaufs 1 weist dieser eine Ausgabedüse 22 zur Abgabe eines Getränkes in das darunter befindliche Gefäß 2 auf. Eine insgesamt mit 3 bezeichnete Sicherheitseinrichtung besteht vorliegend aus einem Stellglied 6, das als eine Wippe gestaltet wurde und über ein Gelenk 5 in Richtung des Doppelpfeiles "B" um eine Schwenkachse 9 schwenkbar ist sowie aus einem Mikroschalter 4. Auf der dem Getränkeauslauf 1 zugewandten Seite des Stellgliedes 6 weist dieses ferner zwei Kontaktflächen 7, 8 auf, wobei die Kontaktfläche 7 in diesem Fall unmittelbar an der korrespondierenden Seite des Mikroschalters 4 anliegt und diesen bei einer weiteren Abwärtsbewegung des Getränkeauslaufs 1 aktiviert, so dass die Höhenverstellung des Getränkeauslaufs 1 gestoppt wird, wenn das Stellglied 6 in Berührungskontakt mit dem Gefäßrand 28 des Gefäßes 2 gelangt. Das Stellglied ist auf der gegenüberliegenden Seite über das Gelenk 5 hinaus verlängert und weist in diesem Abschnitt eine weitere Kontaktfläche 8 auf, die sich ebenfalls an der Oberseite des Stellgliedes 6 befindet. In der gezeigten unteren Endposition des Getränkeauslaufs 1 übt die Kontaktfläche jedoch keine Funktion aus. Sie bildet in einer nachfolgend noch näher zu beschreibenden Weise eine Wirkverbindung mit einem als Stößel ausgeführten Anschlagflansch 10 aus.
Zu bemerken ist mit Hinblick auf die Figur 2 noch, dass in der Nähe des Gelenkes 5 eine Feder 11 zwischen dem Getränkeauslauf 1 und dem Stellglied 6 angeordnet ist, die eine Rückstellung des Stellgliedes 6 in eine neutrale Ausgangslage bewirkt, wenn sich der Getränkeauslauf nicht in einer seiner Endpositionen befindet. Natürlich kann diese Feder auch mit dem Sicherheitsschalter oder Sicherheitssensor 4 eine Einheit bilden beziehungsweise in diesen integriert sein.

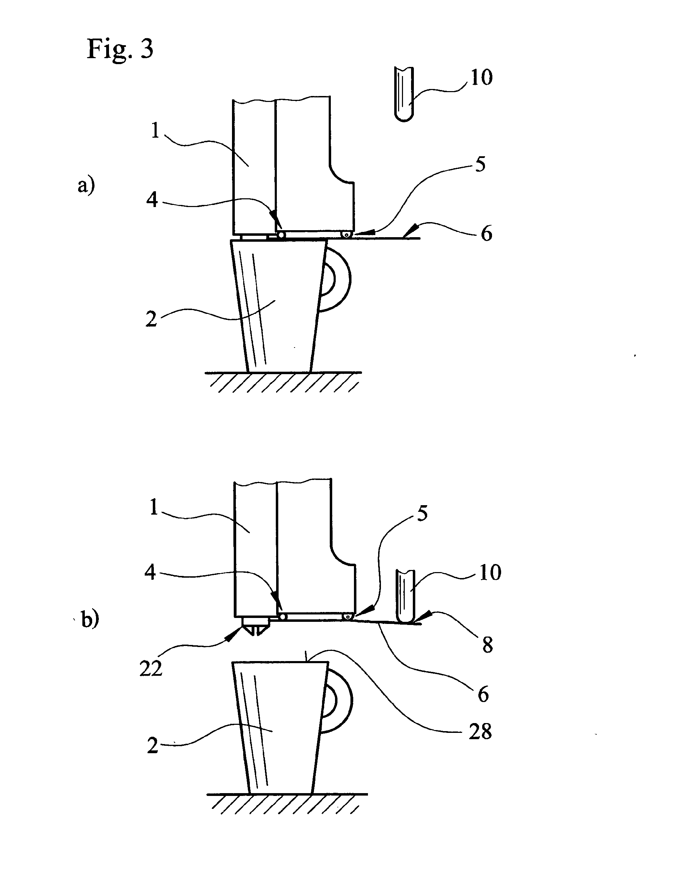

Die Figur 3 veranschaulicht in zwei unterschiedlichen Bildteilen a) und b) je eine Endposition des Getränkeauslaufs 1. Im Bildteil a) ist dabei die untere und im Bildteil b) die obere Endposition des Getränkeauslaufs 1 gezeigt.

Wie aus dem Bildteil a) ersichtlich ist, berührt bei der Abwärtsbewegung des Getränkeauslaufs 1 die Unterseite des als Wippe ausgeführten und um das Gelenk 5 schwenkenden Stellgliedes 6 den Gefäßrand 28 des Gefäßes 2. Dadurch wird der oberhalb des Stellgliedes 6 vorhandene Mikroschalter 4 aktiviert und stoppt die Höhenverstellung des Getränkeauslaufs 1, so dass im Anschluss über die Ausgabedüse 22 ein Getränk in das Gefäß 2 gefüllt werden kann.

Im Bildteil b) ist hingegen die obere Endposition des Getränkeauslaufs 1 gezeigt, bei der ein Abstand zwischen der Unterseite des Getränkeauslaufs 1 und dem Gefäßrand 28 des Gefäßes 2 gegeben ist, so dass das Gefäß 2 problemlos entnommen werden kann. Die Position des Getränkeauslaufs 1 entspricht dabei etwa der Darstellung in Figur 1, wobei der als Stößel ausgeführte Anschlagflansch 10 mit der Kontaktfläche 8 des Stellgliedes 6 in Berührung ist und auf diese Weise eine Verschwenkung des Stellgliedes 6 um das Gelenk 5 bewirkt. Dies hat zur Folge, dass der Mikroschalter 4 aktiviert wird, um dadurch die Aufwärtsbewegung des Getränkeauslaufs 1 zu unterbrechen.

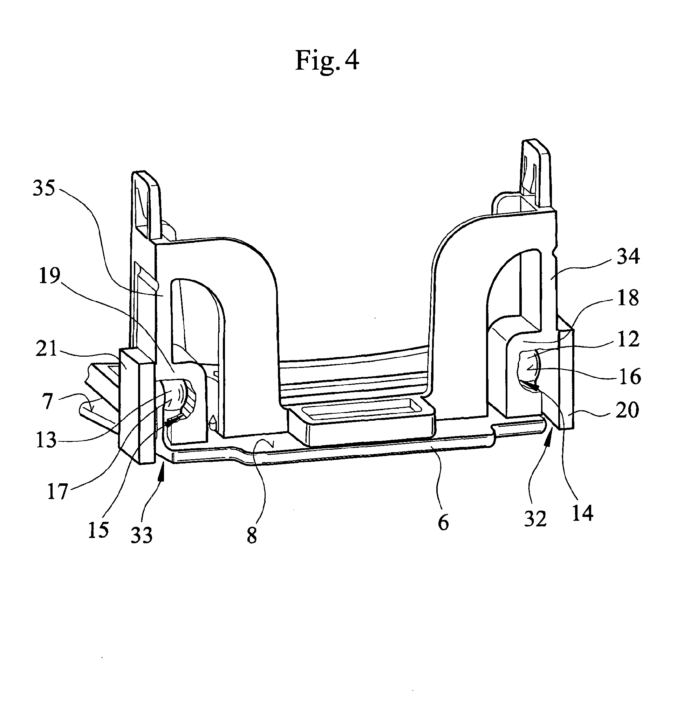

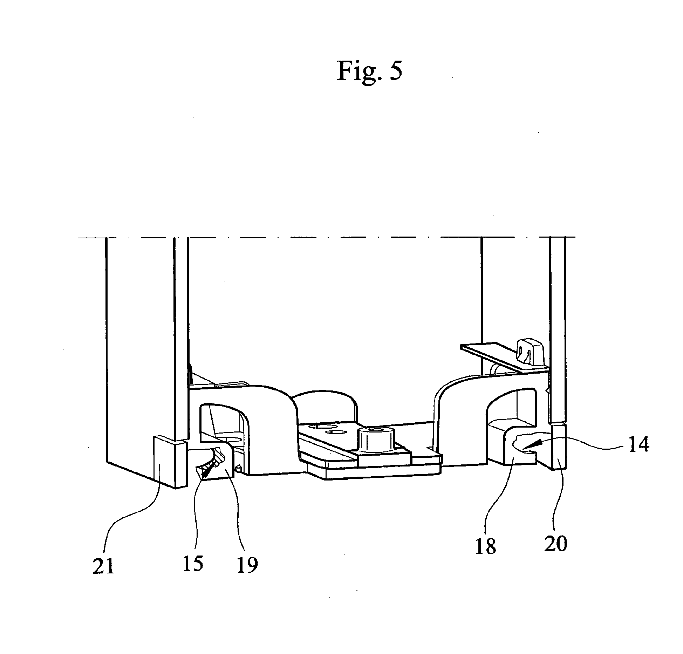

Die Figur 4 erlaubt ausschnittsweise einen Blick in einen Getränkebereiter in einer Ansicht von der Geräteinnenseite her und mit einem als Wippe ausgeführten Stellglied 6. Das als einteiliges Kunsstoff-Formteil hergestellte Stellglied 6 bildet vorliegend eine Wippe mit Kontaktflächen 7 und 8. Seitlich sind an dem Stellglied 6 jeweils Gelenkzapfen 12 und 13 einstückig angeformt, die an ihrer Oberseite eine kugelförmige Oberfläche 16 beziehungsweise 17 (siehe auch Figur 5) aufweisen. Die Gelenkzapfen 12, 13 sind mit ihrer kugelförmigen Oberfläche 16, 17 in korrespondierende Lagerstellen 14, 15 eingesetzt, so dass dadurch ein Gelenk 5 gebildet wird, um das das Stellglied 6 verschwenkt werden kann. Die Fertigung des Stellgliedes 6 als einteiliges Kunsstoff-Formteil ermöglicht zudem eine elastische Ausführung der Gelenkzapfen 12, 13, was den Vorteil einer optimierten, das heißt reibungsarmen Lagerung hat. Die Lagerstellen 14, 15 sind jeweils Bestandteile eines Lagerbockes 18, 19, wobei die Lagerböcke 18, 19 auf ihrer dem Stellglied 6 abgewandten Seite jeweils in einen elastischen Abschnitt 34 beziehungsweise 35 übergehen. Dies hat den Sinn, dass durch ein Zusammendrücken und eine daraus resultierende elastischen Verformung der elastischen Abschnitte 34, 35 aufeinander zu, die jeweils im unteren Bereich des Lagerbockes 18 beziehungsweise 19 vorhandenen Öffnungen 32, 33 ein Entfernen des gesamten Stellgliedes 6 ermöglichen. Um ein unerwünschtes, selbsttätiges Lösen des Stellgliedes 6 zu vermeiden, sind die Lagerstellen 14, 15 der Gelenkzapfen 12, 13 durch einen Verriegelungshebel 20, 21 von ihrer ansonsten nach außen offenen Seite her abgedeckt. Wird dieser Verriegelungshebel 20, 21 in eine Position bewegt, die eine Freigabe der Lagerstellen 14, 15 bewirkt, so können im Anschluss daran die elastischen Abschnitte 34, 35 der Lagerböcke 18, 19 in der zuvor beschriebenen Weise verformt werden, um das Stellglied 6 zu entfernen.

Die Verriegelungshebel 20, 21 können in einer anderen Ausgestaltungsvariante dazu verwendet werden, um die elastischen Abschnitte 34, 35 der Lagerböcke 18, 19 zu verformen. Hierbei ist eher daran gedacht, die Verriegelungshebel 20, 21 unmittelbar an den Lagerböcken 18, 19 anzuformen und jeweils eine Öffnung 32, 33 zwischen der äußeren Oberfläche der Gelenkzapfen 12, 13 und den Verriegelungshebeln 20, 21 vorzusehen, die bei Ausübung eines Druckes auf die Verriegelungshebel 20, 21 die besagte elastischen Verformung der elastischen Abschnitte 34, 35 herbeiführen. Bei dieser Variante können die Gelenkzapfen 12, 13 auch starr, also nicht elastisch sein.

Aus der Figur 5 geht die bereits im Zusammenhang mit der Figur 4 beschriebene, ausschnittsweise Einsicht in einen erfindungsgemäßen Getränkebereiter hervor, wobei hier das Stellglied 6 aus den Lagerstellen 14, 15 entfernt wurde. Damit erlaubt die Figur 5 einen besseren Blick in die kugelförmigen ausgebildeten Lagerstellen 14 und 15.

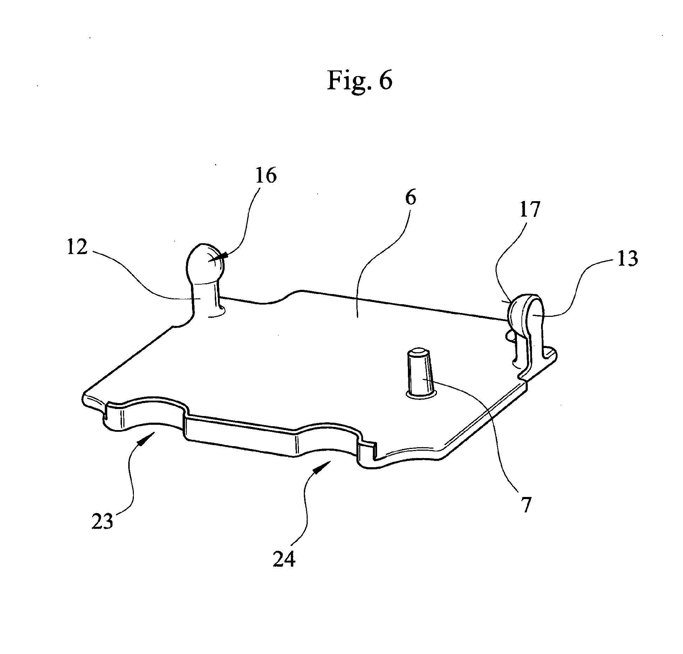

Schließlich zeigt die Figur 6 ein Stellglied 6 nach der Erfindung als Einzelteil und in einer räumlichen Ansicht. Dabei sind deutlich die seitlich an dem als Wippe ausgeführten Stellglied 6 angeformten Gelenkzapfen 12 und 13 erkennbar, deren oberer Abschnitt durch eine kugelförmige Oberfläche 16 beziehungsweise 17 gebildet wird. Im frontseitigen, also den Ausgabedüsen 22 des Getränkeauslaufs 1 zugewandten Abschnitt des Stellgliedes weist dieses zwei Ausnehmungen 23 und 24 auf, die zur Durchführung der Ausgabedüsen 22 des Getränkeauslaufs 1 dienen. Darüber hinaus ist die Kontaktfläche 7 bei dieser Ausführung als ein Stößel ausgeführt, der einstückig an dem Stellglied 6 angeformt wurde.

### BEZUGSZEICHENLISTE:

- 1: Getränkeauslauf
- 2: Gefäß
- 3: Sicherheitseinrichtung
- 4: Sicherheitsschalter oder Sicherheitssensor
- 5: Gelenk
- 6: Stellglied
- 7: Kontaktfläche
- 8: Kontaktfläche
- 9: Schwenkachse
- 10: Anschlagflansch
- 11: Feder
- 12: Gelenkzapfen
- 13: Gelenkzapfen
- 14: Lagerstelle
- 15: Lagerstelle
- 16: Oberfläche
- 17: Oberfläche
- 18: Lagerbock
- 19: Lagerbock
- 20: Verriegelungshebel
- 21: Verriegelungshebel
- 22: Ausgabedüse
- 23: Ausnehmung
- 24: Ausnehmung
- 25: Tür
- 26: Getränkeausgabebereich
- 27: Abtropfblech
- 28: Gefäßrand
- 29: Display
- 30: Blende
- 31: Abgabedüse
- 32: Öffnung
- 33: Öffnung
- 34: Elastischer Abschnitt (des Lagerbockes)
- 35: Elastischer Abschnitt (des Lagerbockes)

## Patentansprüche

1. Getränkebereiter mit einem durch einen Antrieb in seiner Höhenlage verstellbaren Getränkeauslauf (1) zur Abgabe eines Getränkes in mindestens ein Gefäß (2), wobei der Getränkeauslauf (1) eine Sicherheitseinrichtung (3) mit einem Sicherheitsschalter oder Sicherheitssensor (4) zur Unterbrechung der Höhenverstellung des Getränkeauslaufs (1) bei Annäherung an das Gefäß (2) oder bei Kontakt mit dem Gefäß (2) aufweist und zur Aktivierung des Sicherheitsschalters oder des Sicherheitssensors (4) ein um ein Gelenk (5) schwenkbares Stellglied (6) und eine den Sicherheitsschalter oder Sicherheitssensor (4) aktivierende Kontaktfläche (7) vorhanden sind,
**dadurch gekennzeichnet, dass**
das Stellglied (6) eine weitere Kontaktfläche (8) zur Unterbrechung der Höhenverstellung des Getränkeauslaufs (1) bei Erreichung einer oberen Endposition des Getränkeauslaufs (1) aufweist.

2. Getränkebereiter nach Anspruch 1,
**dadurch gekennzeichnet, dass**
das Stellglied (6) ein Hebelarm oder eine Wippe ist.

3. Getränkebereiter nach einem der vorstehend genannten Ansprüche,
**dadurch gekennzeichnet, dass**
die Schwenkachse (9) des Gelenks (5) zwischen den beiden Kontaktflächen (7 und 8) angeordnet ist.

4. Getränkebereiter nach einem der vorstehend genannten Ansprüche,
**dadurch gekennzeichnet, dass**
der Sicherheitsschalter (4) ein mechanischer beziehungsweise der Sicherheitssensor (4) ein optischer oder ein magnetischer Messwertaufnehmer ist und mindestens eine der Kontaktflächen (7, 8) als korrespondierender Messwertgeber ausgeführt ist
oder
der Sicherheitssensor (4) ein optischer oder ein magnetischer Messwertgeber ist und mindestens eine der Kontaktflächen (7, 8) als korrespondierender Messwertaufnehmer ausgeführt ist.

5. Getränkebereiter nach einem der vorstehend genannten Ansprüche,
**dadurch gekennzeichnet, dass**
der Sicherheitsschalter (4) ein mechanischer Mikroschalter ist.

6. Getränkebereiter nach einem der vorstehend genannten Ansprüche,
**dadurch gekennzeichnet, dass**
die obere Endposition des Getränkeauslaufs (1) durch einen Anschlagflansch (10) definiert ist.

7. Getränkebereiter nach einem der vorstehend genannten Ansprüche,
**dadurch gekennzeichnet, dass**
das Stellglied (6) gegen die Rückstellkraft einer Feder (11) um das Gelenk (5) schwenkbar ist.

8. Getränkebereiter nach einem der vorstehend genannten Ansprüche,
**dadurch gekennzeichnet, dass**
das Stellglied (6) als abnehmbare Einheit ausgeführt ist.

9. Getränkebereiter nach einem der Ansprüche 2 bis 8,
**dadurch gekennzeichnet, dass**
das als Wippe oder Hebelarm ausgebildete Stellglied (6) zumindest zwei Gelenkzapfen (12, 13) aufweist, die in korrespondierende Lagerstellen (14, 15) des Getränkeauslaufs (1) eingesetzt sind oder das als Wippe oder Hebelarm ausgebildete Stellglied (6) wenigstens zwei Lagerstellen aufweist, in die korrespondierende Gelenkzapfen des Getränkeauslaufs (1) eingesetzt sind.

10. Getränkebereiter nach Anspruch 9,
**dadurch gekennzeichnet, dass**
die Gelenkzapfen (12, 13) in je einem Lagerbock (18, 19) des Getränkeauslaufs (1) aufgenommen sind.

11. Getränkebereiter nach Anspruch 10,
**dadurch gekennzeichnet, dass**
die Lagerböcke (18, 19) einen elastisch verformbaren Abschnitt (34, 35) aufweisen.

12. Getränkebereiter nach einem der Ansprüche 10 oder 11,
**dadurch gekennzeichnet, dass**
die Gelenkzapfen (12, 13) eine kugelförmige Oberfläche (16, 17) aufweisen und die korrespondierende Lagerstelle (14, 15) innerhalb je eines Lagerbockes (18, 19) als kugelförmige Lagerschale ausgebildet ist.

13. Getränkebereiter nach einem der Ansprüche 9 bis 12,
**dadurch gekennzeichnet, dass**
die Gelenkzapfen (12, 13) in ihrer Lagerstelle (14, 15) durch je einen Verriegelungshebel (20, 21) gegen selbsttätiges Lösen aus der Lagerstelle (14, 15) gesichert sind.

14. Getränkebereiter nach einem der Ansprüche 9 bis 13,
**dadurch gekennzeichnet, dass**
die Gelenkzapfen (12, 13) zumindest abschnittsweise elastisch verformbar ausgeführt sind.

15. Getränkebereiter nach einem der Ansprüche 2 bis 14,
**dadurch gekennzeichnet, dass**
das als Wippe ausgebildete Stellglied (6) für jeden der an dem Getränkeauslauf (1) vorhandenen Ausgabedüsen (22) je eine Ausnehmung (23, 24) aufweist.

16. Getränkebereiter nach einem der vorstehend genannten Ansprüche,
**dadurch gekennzeichnet, dass**
das Stellglied (6) insgesamt ein Kunststoff-Formteil ist.

## Claims

1. Beverage preparation means comprising a beverage outlet (1), which is vertically adjustable by means of a drive, for dispensing a beverage into at least one vessel (2), the beverage outlet (1) comprising a safety device (3) having a safety switch or safety sensor (4) for interrupting the vertical adjustment of the beverage outlet (1) when it approaches the vessel (2) or makes contact with the vessel (2), and, for activating the safety switch or the safety sensor (4), there being an actuator (6) which can be pivoted about a joint (5) and a contact surface (7) which activates the safety switch or safety sensor (4),
**characterised in that**
the actuator (6) comprises a further contact surface (8) for interrupting the vertical adjustment of the beverage outlet (1) when an upper end position of the beverage outlet (1) is reached.

2. Beverage preparation means according to claim 1,
**characterised in that**
the actuator (6) is a lever arm or a rocker.

3. Beverage preparation means according to any of the preceding claims,
**characterised in that**
the pivot axis (9) of the joint (5) is arranged between the two contact surfaces (7 and 8).

4. Beverage preparation means according to any of the preceding claims,
**characterised in that**
the safety switch (4) is a mechanical sensor and the safety sensor (4) is an optical or a magnetic sensor, and at least one of the contact surfaces (7, 8) is configured as a corresponding transmitter,
or
the safety sensor (4) is an optical or a magnetic transmitter and at least one of the contact faces (7, 8) is configured as a corresponding sensor.

5. Beverage preparation means according to any of the preceding claims,
**characterised in that**
the safety switch (4) is a mechanical microswitch.

6. Beverage preparation means according to any of the preceding claims,
**characterised in that**
the upper end position of the beverage outlet (1) is defined by a stop flange (10).

7. Beverage preparation means according to any of the preceding claims,
**characterised in that**
the actuator (6) can be pivoted about the joint (5) against the restoring force of a spring (11).

8. Beverage preparation means according to any of the preceding claims, **characterised in that**
the actuator (6) is configured as a detachable unit.

9. Beverage preparation means according to any of claims 2 to 8,
**characterised in that**
the actuator (6), which is formed as a rocker or lever arm, comprises at least two pivot pins (12, 13) which are inserted into corresponding bearings (14, 15) of the beverage preparation means (1), or the actuator (6), which is formed as a rocker or lever arm, comprises at least two bearings into which corresponding pivot pins of the beverage preparation means (1) are inserted.

10. Beverage preparation means according to claim 9,
**characterised in that**
each of the pivot pins (12, 13) are received in a bearing block (18, 19) of the beverage outlet (1).

11. Beverage preparation means according to claim 10,
**characterised in that**
the bearing blocks (18, 19) comprise an elastically deformable portion (34, 35).

12. Beverage preparation means according to either claim 10 or claim 11,
**characterised in that**
the pivot pins (12, 13) have a spherical surface (16, 17) and the corresponding bearing (14, 15) in each bearing block (18, 19) is formed as a spherical bearing shell.

13. Beverage preparation means according to any of claims 9 to 12,
**characterised in that**
the pivot pins (12, 13) are each secured in their bearing (14, 15) by a locking lever (20, 21) against automatic release from the bearing (14, 15).

14. Beverage preparation means according to any of claims 9 to 13,
**characterised in that**
the pivot pins (12, 13) are designed to be elastically deformable at least in portions.

15. Beverage preparation means according to any of claims 2 to 14,
**characterised in that**
the actuator (6) which is formed as a rocker comprises a recess (23, 24) for each of the outlet nozzles (22) on the beverage outlet (1).

16. Beverage preparation means according to any of the preceding claims,
**characterised in that**
the actuator (6) is a plastics material moulded part in its entirety.

## Revendications

1. Appareil de préparation de boissons, avec une sortie de boisson (1) pouvant être réglée en hauteur par un entraînement et destinée à distribuer une boisson dans au moins un récipient (2), la sortie de boisson (1) présentant un dispositif de sécurité (3) avec un interrupteur de sécurité ou capteur de sécurité (4) destiné à interrompre le réglage en hauteur de la sortie de boisson (1) lors du rapprochement avec le récipient (2) ou en cas de contact avec le récipient (2), et un organe de réglage (6) pivotant autour d'une articulation (5) et une surface de contact (7) activant l'interrupteur de sécurité ou le capteur de sécurité (4) étant présents pour l'activation de l'interrupteur de sécurité ou du capteur de sécurité (4),
**caractérisé en ce que**
l'organe de réglage (6) présente une autre surface de contact (8) pour l'interruption du réglage en hauteur de la sortie de boisson (1) lorsque qu'une position extrême supérieure de la sortie de boisson (1) est atteinte.

2. Appareil de préparation de boissons selon la revendication 1,
**caractérisé en ce que**
l'organe de réglage (6) est un bras de levier ou une bascule.

3. Appareil de préparation de boissons selon une des revendications citées précédemment,
**caractérisé en ce que**
l'axe de pivotement (9) de l'articulation (5) est disposé entre les deux surfaces de contact (7 et 8).

4. Appareil de préparation de boissons selon une des revendications citées précédemment,
**caractérisé en ce que**
l'interrupteur de sécurité (4) est un enregistreur de valeurs de mesure mécanique et le capteur de sécurité (4) est un enregistreur de valeurs de mesure optique ou magnétique, et au moins une des surfaces de contact (7, 8) est réalisée en tant que transmetteur de valeurs de mesure correspondant
ou
l'interrupteur de sécurité (4) est un transmetteur de valeurs de mesure optique ou magnétique et au moins une des surfaces de contact (7, 8) est réalisée en tant qu'enregistreur de valeurs de mesure correspondant.

5. Appareil de préparation de boissons selon une des revendications citées précédemment,
**caractérisé en ce que**
l'interrupteur de sécurité (4) est un micro-interrupteur mécanique.

6. Appareil de préparation de boissons selon une des revendications citées précédemment,
**caractérisé en ce que**
la position extrême supérieure de la sortie de boisson (1) est définie par une bride de butée (10).

7. Appareil de préparation de boissons selon une des revendications citées précédemment,
**caractérisé en ce que**
l'organe de réglage (6) peut pivoter autour de l'articulation (5) contre la force de rappel d'un ressort (11).

8. Appareil de préparation de boissons selon une des revendications citées précédemment,
**caractérisé en ce que**
l'organe de réglage (6) est réalisé en tant qu'unité amovible.

9. Appareil de préparation de boissons selon une des revendications 2 à 8,
**caractérisé en ce que**
l'organe de réglage (6) réalisé en tant que bascule ou bras de levier présente au moins deux pivots (12, 13) qui sont introduits dans des emplacements de palier (14, 15) correspondants de la sortie de boisson (1), ou l'organe de réglage (6) réalisé en tant que bascule ou bras de levier présente au moins deux emplacements de palier dans lesquels sont introduits les pivots correspondants de la sortie de boisson (1).

10. Appareil de préparation de boissons selon la revendication 9,
**caractérisé en ce que**
les pivots (12, 13) sont logés dans respectivement un support de palier (18, 19) de la sortie de boisson (1).

11. Appareil de préparation de boissons selon la revendication 10,
**caractérisé en ce que**
les supports de palier (18, 19) présentent un tronçon (34, 35) élastiquement déformable.

12. Appareil de préparation de boissons selon une des revendications 10 ou 11,
**caractérisé en ce que**
les pivots (12, 13) présentent une surface (16, 17) sphérique et l'emplacement de palier (14, 15) correspondant est constitué en tant que coquille de palier sphérique à l'intérieur de respectivement un support de palier (18, 19).

13. Appareil de préparation de boissons selon une des revendications 9 à 12,
**caractérisé en ce que**
les pivots (12, 13) dans leur emplacement de palier (14, 15) sont bloqués par respectivement un levier de verrouillage (20, 21) qui les empêche de se détacher automatiquement de l'emplacement de palier (14, 15).

14. Appareil de préparation de boissons selon une des revendications 9 à 13,
**caractérisé en ce que**
les pivots (12, 13) sont réalisés de façon élastiquement déformable au moins par tronçons.

15. Appareil de préparation de boissons selon une des revendications 2 à 14,
**caractérisé en ce que**
l'organe de réglage (6) réalisé en tant que bascule présente respectivement un évidement (23, 24) pour chacune des buses de sortie (22) présentes sur la sortie de boisson (1).

16. Appareil de préparation de boissons selon une des revendications citées précédemment,
**caractérisé en ce que**
l'organe de réglage (6) dans son ensemble est une pièce moulée en matière plastique.
